# EUROPEAN PATENT APPLICATION

(11) **EP 2 816 471 A1**
(43) Date of publication of application: **24.12.2014**
(21) Application number: 13250072.9
(22) Date of filing: 19.06.2013
(51) Int. Cl.: G06F 9/44, G06F 11/30

(54) **Categorising software application state**

(71) Applicant: British Telecommunications public limited company, London EC1A 7AJ (GB)
(72) Inventor: The designation of the inventor has not yet been filed
(74) Representative: Roberts, Scott Anthony

(57) **Abstract**

A method for categorising a state of operation of a software application in execution in a virtualised computing environment, the application having associated a set of software components being operable to access data associated with the application, the method comprising the steps of: receiving a set of software application state definitions, each state definition including a definition of an application characteristic having associated criteria based on one or more formal parameters; identifying a set of hypothetical states for the application from the set of state definitions based on the data, wherein the data is used to formulate a set of one or more actual parameters corresponding to formal parameters for criteria associated with one or more of the states in the set of hypothetical states; for each of the states in the set of hypothetical states, in response to a determination that criteria associated with a current state is fully evaluable in the negative, removing the current state from the set of hypothetical states; selecting a candidate state from the set of hypothetical states based on a level of satisfaction of criteria associated with each state in the set of hypothetical states, the candidate state having associated one or more absent formal parameters for which no actual parameter is included in the set of actual parameters; and determining if a level of satisfaction of criteria associated with the candidate state fails to meet a threshold level of satisfaction, and in response to the determination undertaking the steps of: a) adjusting the set of software components such that the set of software components is operable to obtain an improved set of actual parameters associated with the application, the improved set of actual parameters including at least one actual parameter corresponding to an absent formal parameter; and b) repeating the removing, selecting and determining steps.

## Description

### Field of the Invention

The present invention relates to the categorisation of a software application. In particular it relates to the categorisation of a software application in execution in a virtualised computing environment.

### Background of the Invention

The increasing deployment of software applications to service based environments, such as Infrastructure as a Service (IaaS), Platform as a Service (PaaS) and cloud computing environments places a greater burden on application owners and service providers to ensure applications comply with compliance requirements and to demonstrate such compliance. Compliance requirements can be many and varied and can originate from, inter alia, legal or regulatory requirements, application owner requirements, technical requirements, compatibility requirements, and service level agreement requirements.

Manual auditing of a software application can be effective if an auditor has wide ranging access to the application and all the service provider facilities and resources employed for executing the application. The auditor is required to examine each compliance requirement and each resource for the application to assess an extent of compliance. This is particularly cumbersome where resources are distributed over multiple service providers using multiple disparate implementations.

Such auditing is further deficient where services deployed for a software application change as a result of redeployment or reprovisioning of the resources instantiated to provide the application. Such redeployment or reprovisioning can occur automatically. For example, cloud computing services providers can change resources instantiated for an application at runtime in response to changing demands of the application in execution. Substantial increases in network traffic for a web application can be met with a corresponding reprovisioning of the application to instantiate technical resources offering a greater capacity. This characteristic of flexible infrastructures, platforms and services for the deployment of applications is known as "elasticity" since it provides an approach to resource deployment that is flexible enough to grow and shrink with changing demands or requirements of a deployed application. Elasticity can draw on additional resources within an infrastructure, service or cloud, or alternatively can engage additional infrastructures or cloud services.

Accordingly it would be advantageous to provide an approach to compliance assessment that is able to accommodate the elasticity of environments in which applications execute and the diversity and distribution of compliance requirements and resources employed.

In some cases it is not possible or straightforward to obtain all information required to determine if an application is executing in a compliant state. In such cases, it would be advantageous to determine a most likely state of execution of the application. Further, it would be advantageous to determine a degree a confidence associated with a most likely state of execution of the application.

### Summary of the Invention

In accordance with a first aspect, the present invention accordingly provides a method for categorising a state of operation of a software application in execution in a virtualised computing environment, the application having associated a set of software components being operable to access data associated with the application, the method comprising the steps of: receiving a set of software application state definitions, each state definition including a definition of an application characteristic having associated criteria based on one or more formal parameters; identifying a set of hypothetical states for the application from the set of state definitions based on the data, wherein the data is used to formulate a set of one or more actual parameters corresponding to formal parameters for criteria associated with one or more of the states in the set of hypothetical states; for each of the states in the set of hypothetical states, in response to a determination that criteria associated with a current state is fully evaluable in the negative, removing the current state from the set of hypothetical states; selecting a candidate state from the set of hypothetical states based on a level of satisfaction of criteria associated with each state in the set of hypothetical states, the candidate state having associated one or more absent formal parameters for which no actual parameter is included in the set of actual parameters; and determining if a level of satisfaction of criteria associated with the candidate state fails to meet a threshold level of satisfaction, and in response to the determination undertaking the steps of: a) adjusting the set of software components such that the set of software components is operable to obtain an improved set of actual parameters associated with the application, the improved set of actual parameters including at least one actual parameter corresponding to an absent formal parameter; and b) repeating the removing, selecting and determining steps.

Preferably the candidate state is a generic state including a family of specific states, and wherein the threshold level of satisfaction is a first threshold level of satisfaction, the method further comprising, in response to a determination that the first threshold level of satisfaction is met: receiving a set of state definitions of the specific states for the candidate state, each specific state definition including a definition of an application characteristic having associated criteria based on one or more formal parameters; repeating the identifying, selecting and determining steps, wherein the identifying step identifies the set of hypothetical states for the application from the set of state definitions of the specific states, and the threshold level of satisfaction of the determining step is a second threshold level of satisfaction, the second threshold level of satisfaction requiring a further level of satisfaction beyond the first threshold.

Preferably the generic state has associated a software compliance requirement, and each of the specific states corresponds to a state having associated a different degree of confidence that the compliance requirement is satisfied.

Preferably the method further comprises: identifying one or more resources instantiated for execution of the application; and in response to a determination that one or more of the identified resources is changed, repeating the identifying, selecting and determining steps.

Preferably the method further comprises, in response to a determination that the level of satisfaction of criteria associated with the candidate state meets the threshold level of satisfaction, categorising the application as being in the candidate state.

Preferably the candidate state of operation of the application is suitable for indicating a state of compliance of the application with one or more compliance requirements.

In this way it is possible to determine an indicative state of execution of the application as the candidate state and a degree of confidence associated with the determined indicative state as the level of satisfaction of the application with the candidate state. Such determinations can be made even where there is no definitive determination of a state of the application. Categorising the application in this way is particularly advantageous when assessing compliance of the application with one or more compliance requirements. Compliance requirements reflected as application states in the set of state definitions provide for a definition of a set of one or more compliant application states and/or a set of one or more non-compliant application states. Thus, where no definitive determination of a level of compliance of an application can be determined, embodiments of the present invention provide for an identification of a candidate state for categorising the application to provide an indication of whether the software components generate evidence indicating a compliant state or a non-compliant state. Further, the level of satisfaction of the application with the candidate state provides a level of confidence of the indication.

The present invention accordingly provides, in a second aspect, An apparatus for categorising a state of operation of a software application in execution in a virtualised computing environment, the application having associated a set of software components being operable to access data associated with the application, the apparatus comprising: a receiver component operable to receive a set of software application state definitions, each state definition including a definition of an application characteristic having associated criteria based on one or more formal parameters; a hypothetical state identifier component operable to identify a set of hypothetical states for the application from the set of state definitions based on the data, wherein the data is used to formulate a set of one or more actual parameters corresponding to formal parameters for criteria associated with one or more of , the states in the set of hypothetical states; a hypothetical state rationaliser component operable to remove one or more states from the set of hypothetical states in response to a determination that criteria associated with each of the one or more states is fully evaluable in the negative; a candidate state selector component operable to select a candidate state from the set of hypothetical states based on a level of satisfaction of criteria associated with each state in the set of hypothetical states, the candidate state having associated one or more absent formal parameters for which no actual parameter is included in the set of actual parameters; and state criteria satisfaction determiner component operable to determine if a level of satisfaction of criteria associated with the candidate state fails to meet a threshold level of satisfaction; and a software component adjuster component operable in response to the state criteria satisfaction determiner to adjust the set of software components such that the set of software components is operable to obtain an improved set of actual parameters associated with the application, the improved set of actual parameters including at least one actual parameter corresponding to an absent formal parameter.

The present invention accordingly provides, in a third aspect, a computer program element comprising computer program code to, when loaded into a computer system and executed thereon, cause the computer to perform the steps of the method set out above.

### Brief Description of the Drawings

A preferred embodiment of the present invention will now be described, by way of example only, with reference to the accompanying drawings, in which:
Figure 1 is a block diagram of a computer system suitable for the operation of embodiments of the present invention;
Figure 2 is a component diagram illustrating a deployment of a software application with a virtualised computing environment in accordance with an exemplary embodiment of the present invention;
Figure 3 is a component diagram of a plurality of compliance components in accordance with an exemplary embodiment of the present invention;
Figure 4 is a flowchart of a method of the compliance assessment component of Figure 2 in accordance with an exemplary embodiment of the present invention;
Figure 5 is a schematic illustration of an arrangement for determining a level of compliance of the software application of Figure 2 with compliance characteristics in accordance with an exemplary embodiment of the present invention;
Figure 6 is a illustrates components operable in a compliance enforcement process for a deployed software application executing with a virtualised computing environment in accordance with an exemplary embodiment of the present invention;
Figures 7a to 7d are exemplary component diagrams illustrating compliance enforcement processes in use for exemplary applications deployed with virtual computing environments in accordance with exemplary embodiments of the present invention;
Figure 8 is a component diagram of an application state categoriser in accordance with a preferred embodiment of the present invention;
Figure 9 is a flowchart of a method of the application state categoriser of Figure 8 in accordance with a preferred embodiment of the present invention; and
Figure 10 is a representation of a set of state definitions including a generic state definition having specific state definitions in accordance with a preferred embodiment of the present invention.

### Detailed Description of the Preferred Embodiments

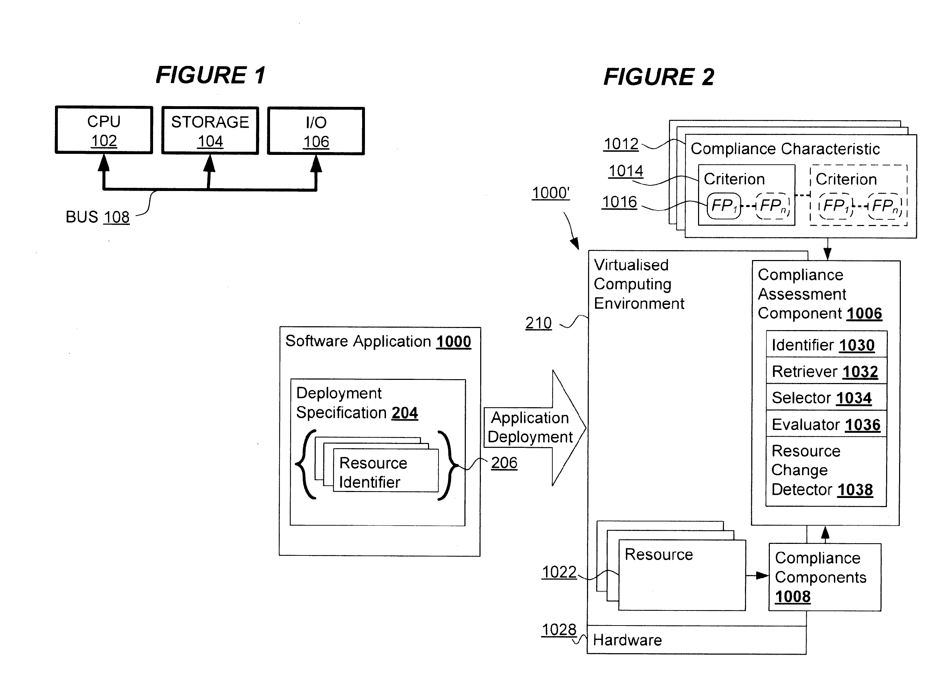

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram illustrating a deployment of a software application 1000 with a virtualised computing environment 210 in accordance with an exemplary embodiment of the present invention. The software application 1000 of Figure 2 includes a deployment specification 204 identifying resources 206 required for deployment of the application 1000 to the virtualised computing environment 210.

Resources can include functions, dataflows and/or technologies. Examples of function resources include bespoke functions, procedures, modules or components provided for the software application 1000, such as a library containing functions embodying or supporting the application 1000 or a class of instantiable objects providing methods and routines of or for the application 1000. Examples of dataflow resources include communications between software components such as the invocation of a function, routine or method of a first component by a facility of a second component. A further example of a dataflow resource is a coupling between two or more components such that messages are passed, requests are sent or data is shared between the two components. Such components can be internal to the deployed application 1000', part of the virtualised computing environment 210 or external to the application 1000' and the virtualised computing environment 210. Examples of technology resources include particular software components, applications or facilities to be installed to deploy the application 1000. For example, a technology resource can be a database software component from a particular technology vendor at a particular version, release or level. Further examples of technology resources include intrusion detection or prevention technologies, virus scanning technologies such as antivirus software, web servers, operating systems, middleware and message handling technologies. Notably, resources include resources of the virtualised computing environment 210 including infrastructure resources provided by an IaaS service provider, service resources provided by an SaaS service provider, and resources provided by a cloud computing service provider.

The virtualised computing environment 210 is an environment for the deployment of the software application 1000. For example, the virtualised computing environment 210 can be provided as a particular operating system executing within a virtual machine with a hypervisor on a hardware device 1028 or, potentially, a distributed arrangement of hardware devices. Examples of hypervisor's include native hypervisors that execute in conjunction with specific hardware, such as Oracle VM Server for SPARC, VMware ESX/ESXi or KVM (Oracle, Oracle VM Server and SPARC are trademarks or registered trademarks of Oracle Corp. in some countries. VMware is a trademark or registered trademark of VMware, Inc in some countries.) Additionally, hypervisors can be hosted in existing operating environments, for example BHyVe, VMware Workstation and VirtualBox (VirtualBox is a trademark or registered trademark of Oracle Corp.) The virtualised computing environment 210 can be provided as a service-based technology such that the environment 210 is delivered as a service for the installation and execution of a software application such as application 1000. In a preferred embodiment, the virtualised environment is provided as part of a cloud computing service provided by a cloud Computing service provider such as BT Cloud Compute available from British Telecommunications plc. Additionally or alternatively, the virtualised computing environment 210 can be provided as, or operate with, a service based infrastructure and/or platform such as IaaS and/or PaaS.

When deployed, the software application 1000' includes one or more resources 1022 operating with the virtualised computing environment 210. The deployed application 1000' has associated a compliance assessment component 1006. The compliance assessment component 1006 is a software or hardware component operable to determine a level of compliance of the deployed application 1000' based on at least one compliance criterion 1016 and at least one compliance software component 1008. The compliance assessment component 1006 is executed, instantiated or otherwise deployed in conjunction with the deployed application 1000': One way to deploy the compliance assessment component 1006 is to include an identifier of the component 1006 with the deployment specification 204 so as to cause the deployment of the compliance assessment component 1006 along with the application 1000. Alternatively the compliance assessment component 1006 can be predefined, predeployed, preinstalled or configurably installed, such as in association with a component of the virtualised computing environment 210 such as a hypervisor or operating system.

The compliance assessment component 1006 is operable in conjunction with one or more compliance characteristics 1012. Each of the compliance characteristics 1012 is a characteristic of a deployed software application, such as application 1000' executing in the virtualised computing environment 210. The compliance characteristics 1012 are used to determine an extent or level of compliance of the deployed software application 1000'. For example, compliance characteristics 212 can be defined in a Cloud Compliance Matrix (CCM) provided by the Cloud Security Alliance (CSA) and available at cloudsecurityalliance.org/research/ccm.

One or more of the resources 1022 instantiated for the deployed application 1000' are resources about which compliance characteristics 1012 can be assessed. As a characteristic of the deployed application 1000', each compliance characteristic 1012 can relate to characteristics of the software application 1000' itself and/or characteristics of the virtualised computing environment 210 with which the application 1000' executes. Yet further, relevant compliance characteristics 1012 can relate to characteristics of software, hardware, functions, features or services employed in deploying the application 1000' such as software installed with the virtualised computing environment 210, and/or software, hardware, functions, features or services external to both the application 1000' and the virtualised computing environment 210, such as software components providing services or functions to the software application 1000' or the virtualised computing environment 210. Thus, the compliance characteristics 212 can include characteristics of the deployed application 1000', the virtualised computing environment 210, any environment for the deployment of the application 1000' such as a Cloud Computing service, an IaaS service, a PaaS service, or a service or function provided external to any virtualised, Cloud, IaaS or PaaS service but operating in conjunction with such service.

Examples of characteristics of software applications include, inter alia: features, facilities, attributes and services of an application such as: resources used; algorithms employed; protocols supported; versions of features, algorithms, services or protocols supported or used; performance characteristics such as speed, overhead or throughput; a level or standard of security; adherence to one or more defined standards; update or refresh intervals used; level of up-to-datedness of features, facilities, attributes or services; environments, systems, protocols or functions used; particular versions or levels of environments, systems protocols or functions used; hardware or software supported; audit facilities available; data governance technology or services employed; user access controls employed; hardware requirements; languages used; encryption standards used; patch management processes employed; intrusion detection or prevention facilities available; virus-detection, protection and prevention facilities available; financial handling facilities available; diagnostic tools employed; diagnostic services available; legal or regulatory requirements adhered to; policies employed; third-party access controls in place; reliability facilities provided; accessibility features available; stability features employed; database used; database facilities supported; geographic location of hardware or software; particular geographic distribution, or non-distribution, of hardware or software; features of physical equipment security; networks supported; data integrity facilities used or measures available; and any other characteristic conceivably attributable to a software application as will be apparent to those skilled in the art.

Each of the compliance characteristics 1012 is defined by a set of one or more compliance criteria 1014. The compliance criteria 1014 are used to determine an extent or level of compliance of the deployed software application 1000' with a compliance characteristic 1012. Each criterion in the set of compliance criteria 1014 concerns a resource identified by the deployment specification 204. For example, a compliance criterion may explicitly relate to a resource identified by one of the resource identifiers in the set of resource identifiers 206. Alternatively or additionally, a compliance criterion can concern a feature, attribute, characteristic or component associated with a resource. For example, a criterion may relate to, inter alia, a provider of a resource, a counterpart to a resource, a configuration of a resource or a function of the resource.

Where multiple compliance criteria 1014 define a compliance characteristic 1012 then satisfaction of all the compliance criteria 1014 is normally required for the deployed software application 1000' to be fully compliant. Satisfaction of anything less than all the criteria 1014 will normally constitutes non-compliance. In some embodiments a single criterion in the set of compliance criteria 1014 is sufficient to define a compliance characteristic. Further, in some embodiments, a more complex set of compliance criteria 1014 may be conceived such that satisfaction of a subset of the compliance criteria 1014 by a deployed software application 1000' is determined to be sufficient to constitute full compliance with the compliance characteristic 1012. For example, multiple alternative compliance criteria 1014 may be provided, any or all of which are satisfactory alternatives to each other. Yet further, in an alternative embodiment the set of compliance criteria 1014 may be comprised of a plurality of subsets of compliance criteria, any or all of which being sufficient to constitute compliance with the compliance characteristic 1012. Thus, an extent to which a deployed software application 1000' satisfies compliance criteria 1014 in the set of compliance criteria is suitable for determining a level of compliance of the software application 1000' with the compliance characteristic 1012. One way to measure a level of compliance for the deployed software application 1000' is to evaluate a proportion of all the compliance criteria 1014 in the set of compliance criteria 1014 that are satisfied and use such proportion as a quantitative measure of a level or extent of compliance. In some embodiments different compliance criteria 1014 can have different weights associated such that an evaluation of a quantitative level of compliance includes applying weights, such as multiplicative factors, to certain of the compliance criteria 1014 when determining a proportion of all the compliance criteria 214 that are satisfied. In this way it is possible to impart a greater emphasis on certain of the compliance criteria 1014 in the set.

The compliance assessment component 1006 includes: an identifier 1030; a retriever 1032; a selector 1034; an evaluator 1036; and a resource change detector 1038. The identifier 1030 is a software or hardware component operable to identify resources 1022 instantiated for execution of the deployed application 1000'. For example, the identifier 1030 may receive the deployment specification 204 indicating the resources instantiated for the application 1000'. Alternatively or additionally the identifier 1030 can monitor the deployed application 1000', the virtualised computing environment 210 or the resources 1022 themselves to identify the resources 1022. In one embodiment, the identifier 1030 receives an indication of the resources deployed for the application 1000' from a component associated with the virtualised computing environment 210 such as a hypervisor component. In an alternative embodiment, the identifier 1030 interfaces with a component of the virtualised computing environment 210 to identify the resources 1022 via in interface such as an API.

The retriever 1032 is a software or hardware component for retrieving one or more compliance characteristics 1012 for the deployed application 1000'. The retrieval of the compliance characteristics 1012 is based on the resources 1022 identified by the identifier 1030. In one embodiment, the retrieval of the compliance characteristics 1012 is prespecified or predetermined on or before deployment of the application 1000'. For example, the one or more of the compliance characteristics 1012 can be specified in a configuration of the deployed application 1000'. In an alternative embodiment one or more of the compliance characteristics 1012 is retrieved by the retriever 1032 using a compliance characteristic selector operable to select one or more compliance characteristics 1012 in dependence on the configuration, deployment and/or architecture of the application 1000' including, inter alia, such features as: the resources 1022 deployed in the application 1000'; the nature of the virtualised computing environment 1000'; and the configuration of the resources 1022.

Each of the compliance characteristics 1012 has associated one or more compliance criteria 1014 being based on formal parameters 1016. The formal parameters 1016 are parameters required for an evaluation of a compliance criterion 1014. A data item, argument, or variable supplied to evaluate the compliance criterion 1014, such data item constituting the formal parameter 1016, is known as an actual parameter.

The selector 1034 is a software or hardware component for selecting one or more compliance software components 1008 for providing actual parameters corresponding to formal parameters 1016 for retrieved compliance characteristics 1012. The actual parameter can include or be based on, inter alia: data relating to, about or from one or more resources 1022; data concerning a state of one or more resources 1022; data indicating an occurrence of an event associated with a resource 1022; data including a measurement of a characteristic of a resource; or a transformation of data associated with the resource. The compliance components 1008 contribute to a determination of a level or extent of compliance of the software application 1000 with a compliance characteristic 1012 by providing actual parameters required for evaluation of criteria 1014. The compliance components 1008 are executed, instantiated or otherwise deployed in conjunction with the deployed application 1000'. One way to deploy the compliance components 1008 is to include an identifier of each of the components 1008 with the deployment specification 204 so as to cause the deployment of the compliance components 1008 along with the application 1000. Thus, in one embodiment, the deployment specification 204 is augmented by the inclusion of a compliance software component identifiers. The inclusion of compliance software component identifiers in the deployment specification 204 is such that, on deployment of the software application 1000, compliance software components 1008 are deployed. Alternatively the compliance components 1008 can be predefined, predeployed, preinstalled or configurably installed, such as in association with a component of the virtualised computing environment 210 such as a hypervisor or operating system.

Preferably the compliance components 1008 are from a set of compliance components executable or executing in association with the virtualised computing environment 210. The selector 1034 is arranged so as to select a compliance components 1008 such that the compliance components 1008 are operable to provide actual parameters for the compliance criteria 1014 associated with the retrieved compliance characteristics 1012. Thus the selector 1034 is operable to select compliance components 1008 that are operable to access, obtain, retrieve or receive such data on which the actual parameters is based.

Notably, it is not a prerequisite for instantiation of the compliance component 1008 that the component is identified in the deployment specification 204. Rather, the compliance component 1008 can be deployed by default, by design, as a consequence of the deployment of a resource identified for the application 1000 or otherwise automatically. In one embodiment, the compliance assessment component 1006 is deployed along with the application 1000 and the compliance assessment component 1006 is operable to cause the deployment of the compliance components 1008.

Most preferably the compliance assessment component 1006 and the compliance software components 1008 execute with the deployed application 1000' in a trusted mode of operation such that the compliance assessment component 1006 and the compliance software components 1008 have trusted access to aspects of the deployed application 1000'. Such aspects can include: configuration information; interfaces; technologies; configuration information and data flows. Examples of interfaces include logical or software interfaces such as APIs of any or all of the resources 1022 instantiated for the deployed application 1000' or any other component operable with, or as part of, the deployed application 1000'. Examples of technologies include technical components such as software components provided by software suppliers or service providers and providing functions or services such that the compliance components 1008 can request or retrieve information or functions of the components. Examples include components, or providers of components, for intrusion prevention, virus detection, middleware or databases. Typically such technologies are uniquely identifiable such as by a version of the technology.

Compliance software components 1008 enjoy a sufficient level of trust that they is able to retrieve, obtain, receive or access information or functionality of resources 1022 in order to provide the actual parameter. Thus, where the retrieved compliance characteristics 1012 relate only to a single resource required for the deployment of the application 1000, then trusted access to the single resource may be sufficient. However, it will be apparent to those skilled in the art that trusted access to resources other than a resource to which the compliance characteristic 1012 explicitly relates may be required to provide the actual parameter.

The evaluator 1036 is a software or hardware component operable to evaluate compliance criteria 1014 using actual parameter supplied by the compliance components 1008. Such evaluation is suitable for contributing to a determination of a level or extent of compliance of the deployed application 1000' with the compliance characteristics 1012.

The resource change detector 1038 is a software or hardware component operable to detect a change to the resources 1022 instantiated for the deployed application 1000'. Changes to resources can arise numerously including, inter alia: changes to the configuration of a resource by another resource, component or an operator; changes to the configuration of the virtualised computing environment 210; upgrades to a resource; failure of a resource; addition of a new resource; changes to the software application 1000; redeployment of the software application 1000; and reprovisioning of a service based environment provided for the deployed application 1000'. Such reprovisioning is common with cloud computing services, IaaS, PaaS and SaaS environments and can arise in response to a change in the resource requirements of the deployed application 1000' at runtime. For example, the resource demands of the deployed application 1000' can vary based on usage of the application 1000' or throughput of the application 1000'. For example, software applications providing web-based services receiving and reacting to requests received over a network can see a rate of receipt of requests fluctuate over time. Accordingly, a cloud computing service provider may change the resource provisions allocated to such an application in response to fluctuations of resource requirements resulting from such fluctuations in requests. This contributes to the elasticity of such service based environments. The resource change detector can detect changes to the resource instantiated for the application 1000' in numerous ways including, inter alia: the obtaining and monitoring of profiles of resources such as process monitoring; hardware resource monitoring; resource consumption; and configuration settings monitoring. Further, changes to resources can be flagged by the virtualised computing environment 210 or other service based environment such as via an indicator, notification, message or otherwise to indicate a resource change. In one embodiment, the resource change detector 1038 is operable in conjunction with the identifier 1030 to identify a change in resources 1022 instantiated for the deployed application 1000'.

The compliance components 1008 can be employed such that one or more of compliance components 1008 or compliance assessment component 1006 further select one or more other compliance components to obtain information required to supply actual parameters. Further or alternatively, compliance components 1008 can be organised in a network, hierarchy, or other suitable arrangement such that information required to evaluate the compliance criteria 1014 can be obtained.

While the identifier 1030, retriever 1032, selector 1034, evaluator 1036 and resource change detector 1038 are illustrated as being comprised with the compliance assessment component 1006 it will be apparent to those skilled in the art that any or all of these components could be alternatively provided as a separate component, or part of a separate component, external to and operable in association with the compliance assessment component 1006. Further, while the compliance assessment component 1006 is illustrated as being partly comprised within the virtualised computing environment 210 it will be appreciated by those skilled in the art that the compliance assessment component 1006 could equally be implemented entirely within the virtualised computing environment 210; or alternatively the compliance assessment component 1006 could be implemented external to the virtualised computing environment 210 and associated with the deployed application 1000' such as being operable in communication with the deployed application 1000' via software components, a software interface, a network or any suitable communication means.

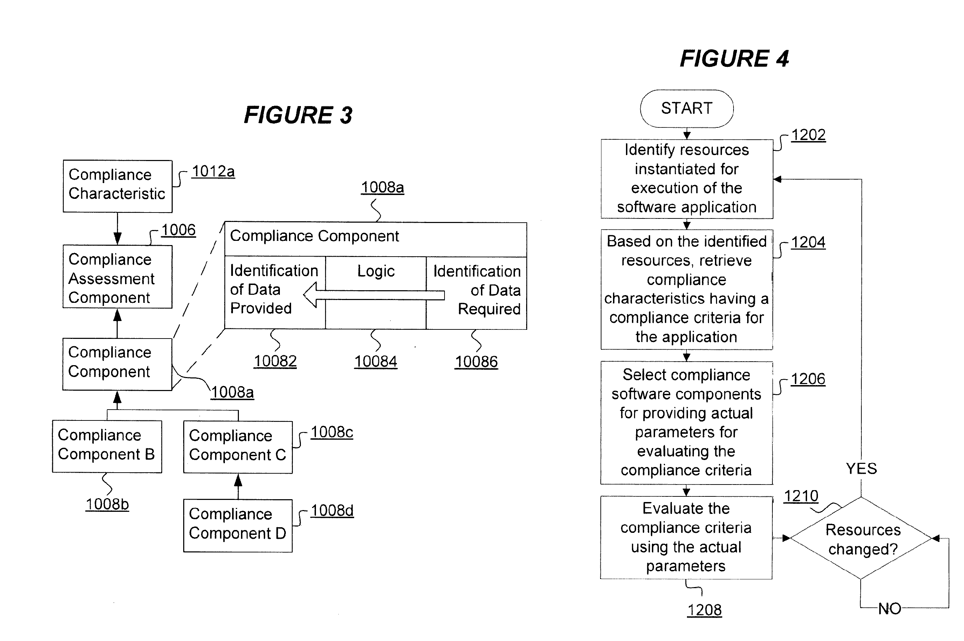

Figure 3 is a component diagram of a plurality of compliance components 1008a to 1008d in accordance with an exemplary embodiment of the present invention. In the arrangement of Figure 3 a compliance component 1008a is initially instantiated, such as through augmentation of the deployment specification 204 for the application 1000. In operation, the compliance component 1008a selects further compliance components 1008b and 1008c. Compliance component 1008c further selects compliance component 1008d. The additionally selected compliance components 1008b to 1008d can also be instantiated as a result of augmentation of the deployment descriptor 204 for the application 1000. Alternatively, the compliance component 1008b to 1008d can be instantiated dynamically at runtime, automatically in association with any of the resources 1022 of the deployed application 1000', or in response to instantiation requests by the compliance assessment component 1006 or other instantiated compliance components, such as compliance component 1008a. The compliance component 1008a selects compliance components 1008b and 1008c to provide data to it, each supplying data constituting at least some of the data required to provide an actual parameter corresponding to a formal parameter 1016. Alternatively, compliance components 1008b and 1008c could be selected by the compliance assessment component 1006. An exploded view of an exemplary embodiment of compliance component 1008a is also illustrated in Figure 3. The compliance component 1008 includes: an identification 10082 of data provided by the compliance component 1008a; an identification 10086 of data required by the compliance component 1008a; and logic 10084 of the compliance component 1008a. The identification 10082 of data provided by the compliance component 1008a is an identification of data that the compliance component 1008a can provide as an output, such as an output to another compliance component or to the compliance assessment component 1006. The identification 10082 can be, inter alia, an advertisement, a publication, a statement or a configuration setting indicating what type, class or category of data the compliance component 1008a is operable to provide. The indication 10086 of data required by the compliance component 1008a is an identification of data that the compliance component 1008a requires in order to generate the data provided by the compliance component 1008a. The required data can be obtained from other compliance components, _such as components 1008b and 1008c in Figure 3. Thus identification 10086 identifies pre-requisite data for the compliance component 1008a. Logic 10084 can include functionality and operations performed by the compliance component 1008a including, inter alia: accessing, retrieving or receiving data from resources of the deployed application 1000'; interface operations for cooperating with resources over an API; measurement logic for measuring characteristics of resources; modification or transformation logic to modify or transform data; logic to combine, fuse or integrate data or information; and logic suitable for identifying patterns, themes or characteristics from data or information. Such data or information can include data received from a resource, data received from another compliance component or data resulting from a measurement operation.

This arrangement of the compliance component 1008a is replicated across all compliance components to provide for the interoperation and cooperation of components in obtaining actual parameters required to evaluate the compliance criterion 1014. The selection of the compliance component 1008a by the compliance assessment component 1006 is based on one or more of the formal parameters 1016 such that the compliance component 1008a includes an identification 10082 of data it provides that is suitable for constituting an actual parameter corresponding to the one or more formal parameters 1016.

In the exemplary embodiment, the identifications 10082 and 10086 for the compliance component 1008a and for the formal parameters 1016 are specified using a common format and/or namespace such that data provided by and required by compliance components can be compared with the formal parameters 1016. In this way it is possible for the compliance assessment component 1006 to select one or more appropriate compliance components to provide data required to evaluate the compliance criterion 1014. Further, it is possible for each compliance component to select further compliance components to provide any required prerequisite data. The common format and/or namespace can be organised in a hierarchy or network such that prerequisite data requirements can be discerned from the namespace.

While the compliance software components 1008 are described as software components it will be appreciated by those skilled in the art that any or all of the compliance component 1008 could be implemented in software, hardware, firmware or combinations of any of software, hardware and firmware. For example, each of the compliance software components 1008 can be implemented as a hardware component such as an evaluator component operable to perform the function of a compliance software component.

Figure 4 is a flowchart of a method of the compliance assessment component 1006 in accordance with an exemplary embodiment of the present invention. At step 1202 the identifier 1030 identifies resources 1022 instantiated for execution of the application 1000'. Such an identification of resources 1022 can be determined based on, inter alia: configuration information for the virtualised computing environment 210; processes and services executing in the virtualised computing environment 210 identified using a process monitoring tool, a process and/or service registry and the like; referring to software components operable to interrogate resources for the application 1000'; accessing resource information via an API of one or more resources 1022; and other techniques as will be apparent to those skilled in the art. At step 1204 the retriever 1032 retrieves compliance characteristics 1012 for the application. The retrieval 1204 is based on the resources identified at step 1202. Compliance characteristics 1012 can be associated with resources 1022 such as by way of a compliance characteristic dictionary, registry or mapping. Alternatively, associations between resources and compliance characteristics can be more complex such as: rule-based associations depending on multiple resources; associations based on attributes or characteristics of resources such as configurations, settings and or arrangements of resources; associations based on versions of resources; and other associations as will be apparent to those skilled in the art. The retrieved compliance characteristics 1012 have associated compliance criteria 1014 based on formal parameters 1016. Subsequently, at step 1206, the selector 1034 selects compliance software components 1008 to provide actual parameters corresponding to the formal parameters 1016. The actual parameters are based on data concerning at least one of the resources 1022 such that the compliance criteria 1014 can be evaluated. The selection of the compliance components 1008 is based on an identification, by each of the compliance components 1008, of one or more data items 10082 that each compliance component 1008 is operable to provide. At step 1208 the evaluator 1036 evaluates the compliance criteria 1014 using the actual parameters. The evaluation contributes to a determination of a level of compliance of the deployed application 1000'. At step 1210 the resource change detector 1038 determines if one or more resources 1022 instantiated for the software application 1000' is changed. Where a resource 1022 is changed, the method returns to step 1202 to repeat the method steps 1202, 1204, 1206 and 1208. In one embodiment, step 1204 is not repeated following a positive determination at step 1210 and the compliance characteristics 1012 from a previous iteration of the method are retrained.

Thus the exemplary arrangements of Figures 2 to 4 provide a separation of concerns between a compliance assessment component 1006 and the compliance software components 1008. Such separation is advantageous where the resources 1022 for the deployed application 1000' can change at runtime, such as due to deployment of the application 1000' using a service based environment such as a cloud computing environment. In particular, the software components 1008 are selected to provide actual parameters such that the selection of appropriate software components 1008 is based on the data requirements for evaluating the compliance criteria 1014. Accordingly, where one or more of the resources 1022 changes, the selection of a software component can result in one or more different software components 1008 able to provide the actual parameters for the changed application. Thus the separation of concerns between the compliance assessment component 1006 and the software components 1008 provides for the selection of appropriate software components based on data requirements for evaluating the criteria 1014 and the resources 1022 instantiated for the deployed application 1000'.

The exemplary arrangement of Figures 2 to 4 thus provide an adaptable approach to compliance assessment for software applications executing with service based infrastructures where resources can change at runtime, such as in response to platform or infrastructure reprovisioning, or where a platform or infrastructure exhibits characteristics of resource elasticity as is typical in cloud computing environments. The exemplary arrangements of Figures 2 to 4 further provide for such compliance assessment without a need to interrupt or redeploy the software application, or redeploy a compliance architecture.

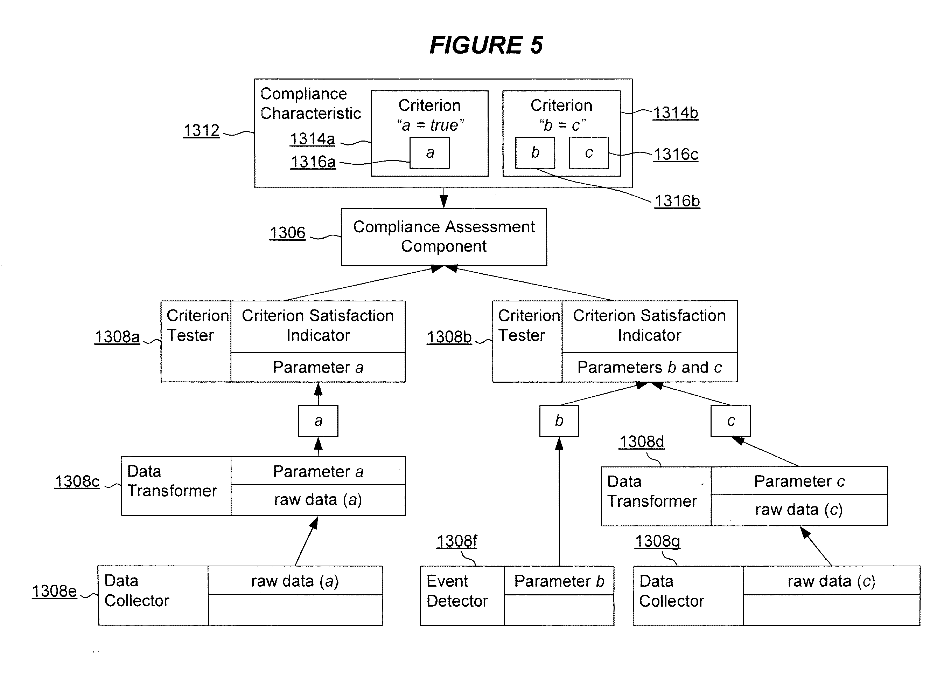

Figure 5 is a schematic illustration of an arrangement for determining a level of compliance of the software application 1000' with a compliance characteristic 1312 in accordance with an exemplary embodiment of the present invention. The compliance characteristic 1312 includes two compliance criteria 1314a and 1314b being expressed in simplified form for ease of understanding. Compliance criterion 1314a is based on a formal parameter "a" 1316a. Compliance criterion 1314b is based on a formal parameter "b" 1316b.

A compliance assessment component 1306 is operable to determine a level of compliance of a software application 1000' with the compliance characteristic 1312. In the exemplary embodiment of Figure 5 the compliance assessment component 1306 achieves this determination by selecting compliance software components 1308a and 1308b as "criterion tester" components operable to evaluate the compliance criteria 1314a and 1314b respectively. In an alternative embodiment the compliance assessment component 1306 is operable to test the criteria 1314a and 314b itself, based on data provided by other compliance software components.

Compliance components 1308a and 1308b advertise their ability to provide "criteria satisfaction indicators" as output data items. Compliance component 1308a includes an identification of required data indicating that the component 1308a requires actual parameter data corresponding to parameter "a" 1316a. Compliance component 1308b includes an identification of required data indicating that the component 1308b requires actual parameter data corresponding to parameters "b" 1316b and "c" 1316c. Compliance component 1308a achieves its purpose by selecting a further compliance component 1308c, a "data transformer" compliance component. Component 1308c advertises its ability to provide actual parameter data corresponding to parameter "a" 1316a. Component 1308c further indicates its dependency on data indicated as "raw data (a)". To satisfy this dependency, component 1308c selects compliance component 1308e, a "data collector" compliance component. Component 1308e advertises its ability to provide data as "raw data (a)". Data collector component 1308e is operable to interface with one or more resources in the deployed application 1000' to access the raw data. For example, data collector 1308e can access a resource using an API for the resource, or by intervening in a data flow, or any other suitable access mechanism.

Compliance component 1308b achieves its purpose by obtaining actual parameter data corresponding to parameter "b" 1216b by selecting compliance component 1308f, an "event detector" compliance component. Component 1308f advertises its ability to provide actual parameter data corresponding to parameter "b" 1316b. Event detector component 1308f is operable to interface with one or more resources in the deployed application 1000' to detect events, generating actual parameter data corresponding to parameter "b" 1316b.

Compliance component 1308b further achieves its purpose by obtaining actual parameter data corresponding to parameter "c" 1316c by selecting compliance component 1308d, a "data transformer" compliance component. Component 1308d advertises its ability to provide actual parameter data corresponding to parameter "c" 1316c. Component 1308d further indicates its dependency on data indicated as "raw data (c)". To satisfy this dependency, component 1308d selects compliance component 1308g, a "data collector" compliance component. Component 1308e advertises its ability to provide data as "raw data (c)". Data collector component 1308g is operable to interface with one or more resources in the deployed application 1000' to access the raw data, such as is described above with respect to component 1308e.

Thus, each compliance component 1308a to 1308d can provide further information by supplementing, adapting, processing, verifying or reacting to the data from downstream components. In this way it is possible to separate the concerns of the compliance components 1308a to 1308g. Such separation is advantageous when information from multiple information sources is required to determine a level or extent of compliance with a compliance characteristic 1312. For example, different compliance software components can enjoy different privileges in relation to a deployed application such that one compliance software component may have trusted access to resources that another compliance software component does not have. Further, complex deployed applications can have associated many and varied compliance characteristics, each having potentially many and varied compliance criteria. Such criteria can relate to numerous and differing resources required for application deployment, with the differing resources having associated information in a multiplicity of forms. Where there are overlaps in information requirements to assess a level or extent of compliance with multiple compliance characteristics it is advantageous to centralise data gathering for a resource such that any duplication in the retrieving or obtaining of data for assessing compliance criteria is reduced. Further, it is advantageous to distribute responsibility for information collection between compliance software components which can specialise in, dedicate to, relate to or associate with particular resources, data formats, information types, information gathering methods or other variable attributes for a deployed application. Such distribution reduces a degree of coupling in the compliance determination methods and systems and further provides for a granular approach to information gathering.

The approach to determining a level of compliance described with reference to the exemplary embodiments is particularly advantageous in service based software environments such as cloud computing environments. The elasticity of such service based technologies can result in adaptations or modifications to the resources employed in and for a deployed application, including changes in real-time at runtime. Elasticity can also result in the supplementing of resources with additional resources or the replacement of resources with alternative or new resources. Such changes to the resources for a deployed application require repeat assessment of compliance characteristics to ensure a determination of an extent or level of compliance accurately reflects a current configuration of the application. This is particularly important where a particular minimum level of compliance is required for continuing operation of the deployed application such as, for example, to ensure a requisite level of security is provided. The selection of compliance components by a compliance assessment component and/or other compliance components can be undertaken dynamically at runtime. Accordingly, compliance components can change along with the resources for a deployed application.

Selection of, and communication between, compliance components such as components 1308a to 1308g can be achieved using any suitable mechanism known in the art including inter alia: a directory system; a publish-subscribe infrastructure; a request-response protocol; and a message passing scheme such as a brokered messaging infrastructure. In one example, the identifications of data provided by each compliance component can be stored in a directory accessible to other compliance components and/or the compliance assessment component such that when a compliance component is required for a particular data type, parameter or data item, identification of a suitable compliance component can be achieved by reference to the directory.

In a second example, a compliance component can advertise an identification of data it is capable of providing by publishing messages over a publish-subscribe infrastructure such that subscribing components, such as other compliance components or a compliance assessment components, are able to receive such publications by subscribing to receive such publications, such as by subscribing on a topic basis. A topic scheme can be devise, as is known in the art, whereby publications on a particular topic are related. One approach to implementing such a topic scheme uses an identification of a type of data from a global namespace of data types, such as an identification of a formal parameter, such that compliance components requiring data of that type can subscribe to publications on that topic.

In a third example, compliance components can communicate with each other directly or via a compliance assessment component using a predefined protocol such as a request-response protocol. Such a protocol can include a definition of messages for requesting an identification of data provided by a compliance component and requesting data itself. Using such a protocol, compliance components can form a compliance component network having one of any number of potential topologies including, inter alia, hierarchical, star, tree, mesh or combinations thereof.

In a fourth example, compliance components can communicate with each other via a message passing scheme such as a brokered messaging infrastructure. Message broker components are suitable for communicating messages between entities in connected networks of entities and can further adapt or translate messages where communicating components have different formats, styles or needs. Such messages can be used to communicate information about compliance components such as indications of data provided by components. Further, messages can be used to request and receive data from components.

Thus, Figure 5 illustrates how the compliance components are operable to interoperate to provide potentially mulitple layers of data abstraction and granularity, for example ranging from raw data to evidence about compliance criterion satisfaction; and/or multiple data collection or transformation components that enable, for example, the fusion, aggregation, measurement, determination or derivation of data and/or evidence of compliance requirement satisfaction.

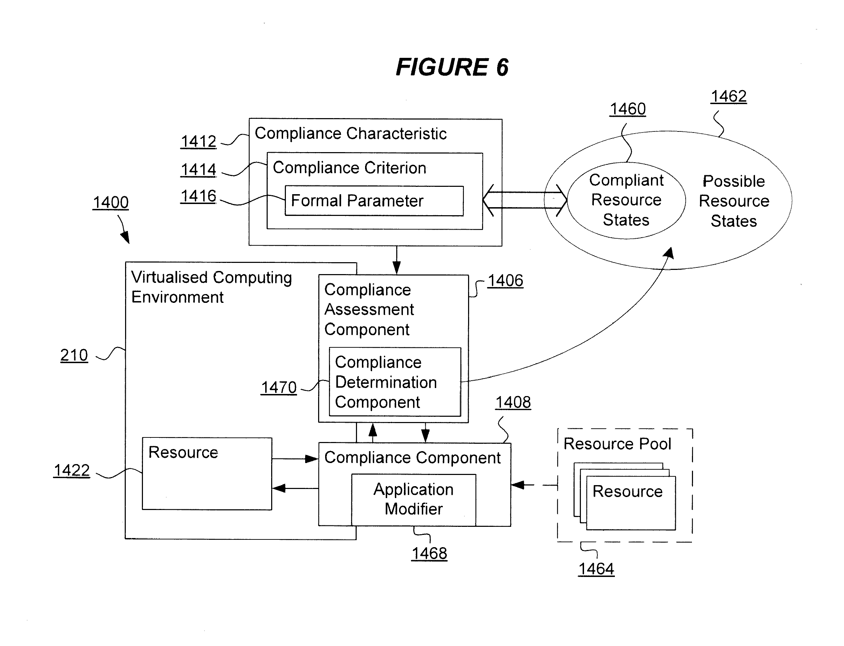

Figure 6 is a illustrates components operable in a compliance enforcement process for a deployed software application 1400 executing with a virtualised computing environment 210 in accordance with an exemplary embodiment of the present invention. The deployed software application 1400 includes a resource 1422 such as a platform, infrastructure, service, software, dataflow or other resource instantiated for the deployment of the application 1400. Notably, the resource 1422 can be external to either or both the application 1400 and the virtualised computing environment 210. A compliance assessment component 1406 is operable to evaluate a level or extent of compliance of the software application 1400 with a compliance characteristic 1412. In doing so, the compliance assessment component 1406 operates with a compliance software component 1408 as previously described. A compliance criterion 1414 for the compliance characteristic 1412 is suitable for defining a set 1460 of compliant resource states for the resource 1422. The set 1460 of compliant resource states is a subset of a set 1462 of multiple possible resource states for the resource 1422. The set 1462 of multiple possible resource states does not necessarily include all possible resource states. In one embodiment, the set 1462 of possible resource states is defined to be the universe of all states. In an alternative embodiment the set 1462 of possible resource states is not explicitly defined. It will be appreciated by those skilled in the art that one or more compliance criteria associated with one or more compliance characteristics may define one or more sets of compliant states for one or more resources instantiated for the deployed application 1400. For example, a set of compliant states can include a state of a combination of multiple resources instantiated for the application 1400. Further it will be appreciated that the sets 1460 and 1462 of application states may correspond to states of the deployed application 1400 as a whole, which may itself be characterised by states of resources deployed for the application 1400.

An exemplary compliance criterion 1414 is a criterion that all data communicated via a dataflow resource between a sender resource and a receiver resource is encrypted. The exemplary criterion defines a compliant state of the dataflow resource being a state in which the data on the dataflow resource is encrypted. Elaborating the example, the exemplary criterion can be considered to define multiple states of the dataflow resource, such as: a state in which the data on the dataflow resource is encrypted with a 64bit key; and a state in which the data on the dataflow resource is encrypted with a 128bit key. Such compliant states constitute the set 1460. The set 1462 can include additionally a state in which the data on the dataflow resource is not encrypted.

The compliance assessment component 1406 includes a compliance determination component 1470. The compliance determination component 1470 is a software or hardware component operable to determine if a current state of the resource 1422 is outside the set 1460 of compliant resource states. The current state of the resource 1422 is determined based on evidence provided by the compliance software component 1408. While a single compliance component 1408 is illustrated in Figure 6 it will be appreciated that a network, hierarchy or other arrangement of multiple compliance components could be employed as previously described. The compliance component 1408 provides evidence to the compliance determination component 1470 for making the determination. When the compliance determination component 1470 determines that the state of the resource 1422 is outside the set 1460 of compliant resource states, the deployed software application 1400 is modified such that the application 1400 includes a resource having a state within the set 1460 of compliant resource states. Accordingly, such modification of the application 1400 constitutes enforcement of the compliance characteristic 1412.

Modification of the application 1400 is undertaken by an application modifier 1468 of the compliance component 1408. One example of a modification the application modifier 1468 can apply to the application 1400 is the introduction of one or more additional resources from a pool of resources 1464. Such additional resources can be selected by the application modifier 1468 such that the resources are operable in a state within the set 1460 of compliant states. Another example of a modification the application modifier 1468 can apply to the application 1400 is the replacement of the resource 1422 with one or more resources from a pool of resources 1464, such replacement resources being operable in a state within the set 1460 of compliant states. A further example of a modification by the application modifier 1460 is a modification to a configuration, arrangement, instantiation or deployment of the resource 1422, or other resources associated with the application 1400, such that the resource 1422 is operable to transition to a state within the set 1460 of compliant states. Thus after modification by the application modifier 1468, the application 1400 has a resource having a state within the set 1460 of compliant resource states and the compliance characteristic 1412 has been enforced.

It will be appreciated that the compliance assessment component 1406 can be further operable to repeat the evaluation of a level or extent of compliance of the software application 1400 with a compliance characteristic 1412. Such repeated evaluations by the compliance assessment component 1406 can occur in accordance with a predefined schedule, in response to a modification to the application 1400, in response to a reprovisioning of resources for the application by a service provider such as a cloud computing service provider, or based on any other suitable trigger. Thus a cycle of evaluating a level of extent of compliance and enforcing compliance via the application modifier 1468 can ensure an ongoing and up-to-date assessment and enforcement of the compliance characteristic 1412. This is particularly advantageous where the application 1400 is deployed to a service based environment or infrastructure which exhibits characteristics of elasticity in resource provisioning.

While the arrangement of Figure 6 shows the compliance determination component 1470 being comprised within the compliance assessment component 1406 and the application modifier 1468 being comprised in the compliance component 1408, it will be appreciated that such an arrangement is purely exemplary. The compliance determination component 1470 and/or the application modifier 1468 can be is associated with, or included in, the compliance software component 1408 or a compliance software component cooperating with the component 1408. In an exemplary embodiment the compliance assessment component 1406 is operable to communicate the compliance criterion 1414 to the compliance component 1408 such that the compliance component 1408 is operable to determine the extent of the set 1460 of compliant resource states. It will be appreciated that multiple compliance components can be employed and accordingly the compliance criterion 1414, or information about the compliance criterion 1414, can be shared with and between such multiple compliance components. This is particularly advantageous where compliance components are distributed in association with resources throughout the deployed application 1400 such that different compliance components collect data from, and/or undertake enforcement operations in respect of, different resources.

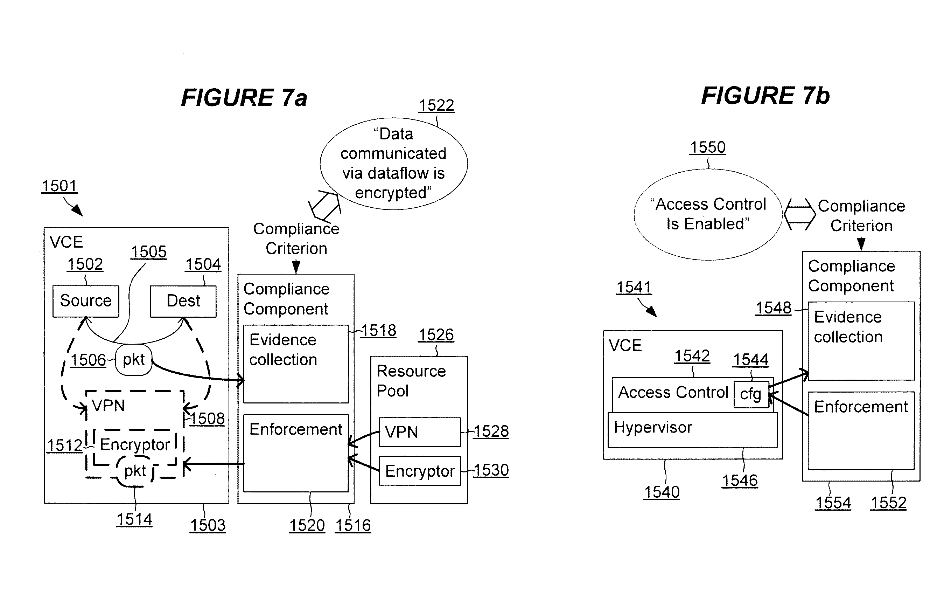

Figure 7a is a first exemplary component diagram illustrating a compliance enforcement process in use for an exemplary application 1501 deployed with a virtual computing environment 1503 in accordance with an exemplary embodiment of the present invention. The application 1501 includes a source resource 1502, such as a first software component, communicating via a dataflow resource 1505 with a destination resource 1504, such as a second software component. The dataflow 1505 is illustrated as linking the source 1502 and destination 1504 and has a packet 1506 of information illustrated in communication via the dataflow 1505. A compliance component 1516 includes an evidence collection module 1518 and an enforcement module 1520. The compliance component 1516 receives a compliance criterion or information about a compliance criterion. In the illustrative arrangement of Figure 7a the compliance criterion is defined as "packets communicated via the dataflow 1505 must be encrypted". Thus the compliance criterion defines a set 1522 of compliant resource states for the dataflow 1505 including a state in which packet 1506 communicated via the dataflow 1505 is encrypted.

In use, the evidence collection module 1518 is operable to collect information about the packet 1506 from the application 1501. For example, evidence collection component 1518 is operable in a trusted mode of operation with respect to the application 1501 and/or the virtualised computing environment 1503 such that the module 1518 accesses one or more of, inter alia: the contents of the packet 1506; an interface of the source and/or destination resources 1502, 1504 through which requests can be communicated to the source and/or destination resources 1502, 1504; and configuration information relating to the source and/or destination resources 1502, 1504. Through the information accessible to the evidence collection component 1518 data is collected that can be used to generate evidence of a state of the dataflow 1505 and, in particular, a state of encryption of data communicated via the dataflow 1505. Subsequently, a compliance determination component (not illustrated in Figure 7a) determines if the state of the dataflow 1505 is within the set 1522 of compliant states. The compliance determination component may constitute part of the evidence collection component 1518, the compliance component 1516, the enforcement component 1520 or a compliance assessment component (not illustrated in Figure 7a) cooperating with the compliance component 1518.

The arrangement of Figure 7a illustrates the case where the state of the dataflow 1505 is not within the set 1522 of compliant states. Accordingly, the enforcement component 1520 is operable to modify the software application 1501 to include one or more resources with a state belonging to the set of compliant states 1522. The enforcement component 1520 includes an application modifier for retrieving new resources from a resource pool 1526 in order to modify the resources instantiated for the application 1501. In particular, the resource pool includes a virtual private network (VPN) resource 1528 and an encryptor resource 1530. The VPN 1528 is operable to provide a virtual network via which the dataflow 1505 can be passed such that virtual network is not visible to either the source or destination components 1502, 1504. The encryptor 1530 is a software component operable to receive unencrypted input data and provide encrypted output data. In use, the application modifier of the enforcement component 1520 modifies the application 1501 by channelling the dataflow 1505 through a new VPN resource 1508 such that a new encryptor resource 1512 can encrypt data communicated via the dataflow 1505. Accordingly packets 1514 communicated via the dataflow 1505 of the application 1501 after modification will be subject to the components of the application shown in broken lines.

Subsequently, the compliance component 1516 in conjunction with a compliance assessment component is operable to determine an extent or level of compliance of the modified application 1501. Such an assessment will determine that the dataflow resource 1505 has a state within the set 1522 of compliant states due to the modification of the application 1501 by the application modifier.

Figure 7b is a second exemplary component diagram illustrating a compliance enforcement process in use for an exemplary application 1541 deployed with a virtual computing environment 1540 in accordance with an exemplary embodiment of the present invention. The application 1541 includes a hypervisor resource 1546 having executing thereon an access control resource 1542. The access control resource 1542 has associated a configuration 1544. A compliance component 1554 includes an evidence collection module 1548 and an enforcement module 1552. The compliance component 1554 receives a compliance criterion or information about a compliance criterion. In the illustrative arrangement of Figure 7b the compliance criterion is defined as "access control resources have a configuration that is enabled". Thus the compliance criterion defines a set 1550 of compliant resource states for the access control configuration 1544 including a state in which access control configuration 1544 is enabled.

In use, the evidence collection module 1548 is operable to collect information about the access control configuration 1544 from the application 1541. For example, evidence collection component 1548 is operable in a trusted mode of operation with respect to the application 1541 and/or the virtualised computing environment 1540 such that the module 1548 accesses one or more of, inter alia: the contents of the configuration 1544; an interface of the access control resource 1542 through which requests can be communicated regarding the configuration 1544; and the hypervisor 1546 through which requests can be communicated regarding the access control resource 1542 and/or the configuration 1544. Through the information accessible to the evidence collection component 1548 data is collected that can be used to generate evidence of a state of the access control configuration 1544 and, in particular, a state of enablement of the access control configuration 1544. Subsequently, a compliance determination component (not illustrated in Figure 7b) determines if the state of the access control configuration 1544 is within the set 1550 of compliant states.

Where a state of the access control configuration 1544 is not within the set 1550 of compliant states, the enforcement component 1552 is operable to modify the software application 1541 to include one or more resources with a state belonging to the set of compliant states 1550. In particular, the enforcement component 1552 includes an application modifier for directly modifying the access control configuration 1544 for the application 1541 such that the access control configuration 1544 is set to an enabled state.

Subsequently, the compliance component 1554 in conjunction with a compliance assessment component is operable to determine an extent or level of compliance of the modified application 1541. Such an assessment will determine that the access control configuration 1544 has a state within the set 1550 of compliant states due to the modification of the application 1541 by the application modifier.

In an extension to the exemplary arrangement of Figure 7b, the application 1541 is a web application allowing communication over transmission control protocol (TCP) ports 80 (normally reserved for hypertext transport protocol (HTTP) communications) and 21 (normally reserved for file transfer protocol (FTP) communications). While the application allows communication over both ports 80 and 21, the application 1541 provides a server or daemon process supporting HTTP on port 80, leaving port 21 unused but open for communication. Thus, port 80 is configured for communication while port 21 is not configured but is open for communication. In the extension to the exemplary embodiment the access control resource 1542 is a firewall resource providing network communication security facilities including allowing or preventing communication over defined network paths including TCP ports. In the extension to the exemplary embodiment the compliance criterion is further defined as "only configured TCP ports are open for communication". Thus, in the extension of the exemplary embodiment, the compliance criterion defines a set 1550 of compliant resource states for the access control configuration 1544 including a state in which access control configuration 1544 is operable to prevent communication via ports that are not configured. Thus, in use, the evidence collection component 1548 in the extended embodiment is operable, in conjunction with resources of the deployed application 1541, to determine which TCP ports are configured and which TCP ports are open for communication. This determination can be based on an inspection of a configuration of the application 1541 or by sending requests to an interface of resources for the application 1541. Alternatively, the determination can be based on measurements or testcases conducted by the evidence collection component 1548, such as a port scan to identify open TCP ports and a resource scan to identify which resources are operable with open TCP ports to determine configured ports. In the extended embodiment, if there are open TCP ports that are not configured then the enforcement component 1552 is operable to configure the proxy 1544 to prevent communication over non-configured ports. Thus the extended exemplary embodiment of Figure 7b illustrates an example in use for compliance assessment and enforcement.

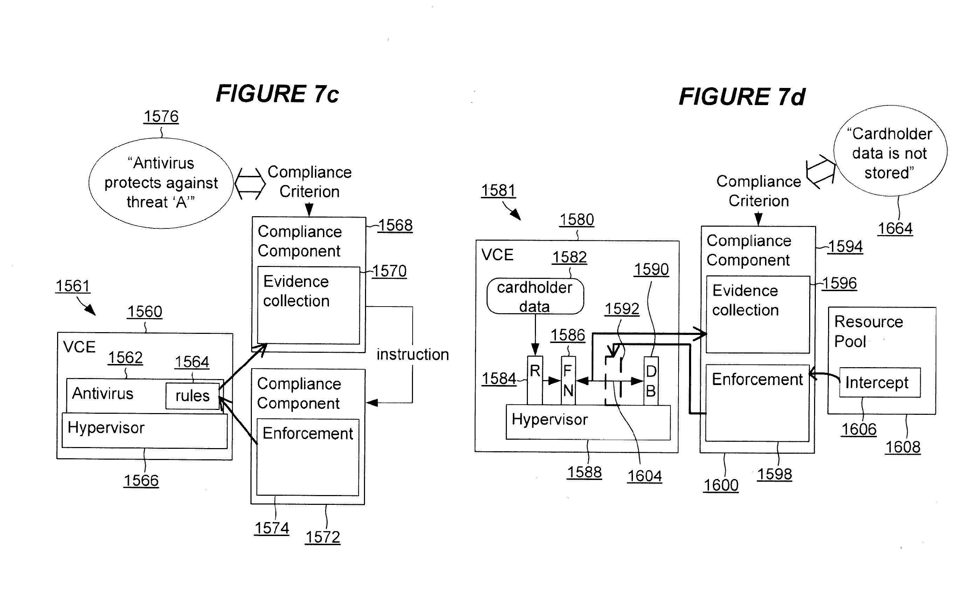

Figure 7c is a third exemplary component diagram illustrating a compliance enforcement process in use for an exemplary application 1561 deployed with a virtual computing environment 1560 in accordance with an exemplary embodiment of the present invention. The application 1561 includes a hypervisor resource 1566 having executing thereon an antivirus resource 1562. The antivirus resource 1562 has associated rules 1564 reflecting threats the antivirus resource 1562 is operable to protect against. A first compliance component 1568 includes an evidence collection module 1570. A second, separate, compliance component 1572 includes an enforcement module 1574. The first compliance component 1568 receives a compliance criterion or information about a compliance criterion. In the illustrative arrangement of Figure 7c the compliance criterion is defined as "antivirus resources protect against specific threat 'A"'. Thus the compliance criterion defines a set 1576 of compliant resource states for the antivirus rules 1564 including a state in which the rules 1564 include protection against a specific threat 'A'.

In use, the evidence collection module 1570 is operable to collect information about the antivirus rules 1564 from the application 1561. For example, evidence collection component 1570 is operable in a trusted mode of operation with respect to the application 1561 and/or the virtualised computing environment 1560 such that the module 1570 accesses one or more of, inter alia: the contents of the antivirus rules 1564; an interface of the antivirus resource 1562 through which requests can be communicated regarding the rules 1564; and the hypervisor 1566 through which requests can be communicated regarding the antivirus resource 1562 and/or the rules 1564. Through the information accessible to the evidence collection component 1570 data is collected that can be used to generate evidence of a state of the antivirus rules 1564 and, in particular, whether the rules 1564 include protection against specific threat 'A'. Subsequently, a compliance determination component (not illustrated in Figure 7c) determines if the state of the antivirus rules 1564 is within the set 1576 of compliant states.

Where a state of the antivirus rules 1564 is not within the set 1576 of compliant states, the first compliance component 1568 is operable to select the second compliance component 1572 for an enforcement operation. The selection of the second compliance component 1572 can be based on information provided by the second compliance component 1572 such as an indication by the second compliance component 1572 of functions and facilities provided by the second compliance component 1572. For example, the second compliance component 1572 can advertise resources of the application 1561 for which the second compliance component 1572 is operable to undertake enforcement operations. Such advertisement or communication of the capabilities of the second compliance component 1572 can be communicated to the first compliance component via a broadcast communication, a publish/subscribe mechanism, a request/response protocol or other suitable communication means. Thus, the first compliance component 1568 instructs the second compliance component 1572 to enforce the compliance criterion. The instruction will therefore include the compliance criterion, or information about the compliance criterion, such that the second compliance component has sufficient information to apply an appropriate enforcement action.

The enforcement component 1574 of the second compliance component 1572 includes an application modifier operable to modify the software application 1561 to include one or more resources with a state belonging to the set of compliant states 1576 in accordance with the instruction from the first compliance component 1568. For example, the enforcement component 1574 can include an application modifier for directly modifying the antivirus rules 1564 such that rules protection against threat 'A' are provided. Alternatively, the application modifier can be operable to instruct the antivirus resource 1562 to undertake an upgrade, update, reinstall or other operation suitable to retrieving new or additional rules 1564. In a further alternative, the application modifier can be operable to retrieve a new resource suitable for providing antivirus functionality and including protection against threat 'A'.

Subsequently, the compliance component 1568 in conjunction with a compliance assessment component is operable to determine an extent or level of compliance of the modified application 1561. Such an assessment will determine that the antivirus rules 1564 have a state within the set 1576 of compliant states due to the modification of the application 1561 by the application modifier.

Figure 7d is a fourth exemplary component diagram illustrating a compliance enforcement process in use for an exemplary application 1581 deployed with a virtual computing environment 1580 in accordance with an exemplary embodiment of the present invention. The application 1581 includes a hypervisor 1588 having executing thereon: a receiver software resource 1584; an application function software resource 1586; and a database resource 1590. In operation the application 1581 receives cardholder data 1582 at the receiver 1584 such as credit card information for a cardholder. The receiver 1584 communicates the cardholder data to the application function 1586 which in turn accesses the database 1590 via dataflow 1604 for the storage and retrieval of information. A compliance component 1594 includes an evidence collection module 1596 and an enforcement module 1598. The compliance component 1596 receives a compliance criterion or information about a compliance criterion. In the illustrative arrangement of Figure 7d the compliance criterion is defined as "cardholder data 1582 is not stored". Thus the compliance criterion defines a set 1664 of compliant resource states for the dataflow 1604 including a state in which information communicated for storage to the database 1590 via the dataflow 1604 does not include cardholder data 1582.

In use, the evidence collection module 1596 is operable to collect information about the dataflow 1604 from the application 1581. For example, evidence collection component 1596 is operable in a trusted mode of operation with respect to the application 1581 and/or the virtualised computing environment 1580 such that the module 1518 accesses one or more of, inter alia: the contents of data communicated via the dataflow 1604; an interface of the application function 1586 and/or the database 1590 through which requests can be communicated; and the contents of the cardholder data 1582 accessed directly or via the receiver 1584 or the application function 1586. Through the information accessible to the evidence collection module 1596 data is collected that can be used to generate evidence of a state of the dataflow 1604 and, in particular, a state of the contents of data communicated over the dataflow 1604 in respect of the cardholder data 1582. Subsequently, a compliance determination component (not illustrated in Figure 7d) determines if the state of the dataflow 1604 is within the set 1664 of compliant states.

The arrangement of Figure 7d illustrates the case where the state of the dataflow 1604 is not within the set 1664 of compliant states. Accordingly, the enforcement component 1598 is operable to modify the software application 1581 to include one or more resources with a state belonging to the set of compliant states 1664. The enforcement component 1598 includes an application modifier for retrieving new resources from a resource pool 1608 in order to modify the resources instantiated for the application 1581. In particular, the resource pool includes an intercept resource 1606 such as a dataflow proxy, software router or other software component operable to intercept communication across a dataflow such as dataflow 1604. In use, the application modifier of the enforcement component 1598 modifies the application 1581 by introducing the interceptor resource 1606 as a new resource 1592 in the application 1581 to intercept all communications between the application function 1586 and the database 1590. The new resource 1592 is further operable to redact, excise, remove, overwrite or otherwise remove any data originating from cardholder data 1582 communicated via the dataflow 1604. Accordingly information communicated via the dataflow 1604 of the application 1581 after modification will be subject to the components of the application shown in broken lines in Figure 7d. The removal of cardholder data from information communicated via the dataflow 1604 will preclude the storage of cardholder data in the data store 1590.

Subsequently, the compliance component 1594 in conjunction with a compliance assessment component is operable to determine an extent or level of compliance of the modified application 1581. Such an assessment will determine that the dataflow resource 1604 has a state within the set 1664 of compliant states due to the modification of the application 1581 by the application modifier.

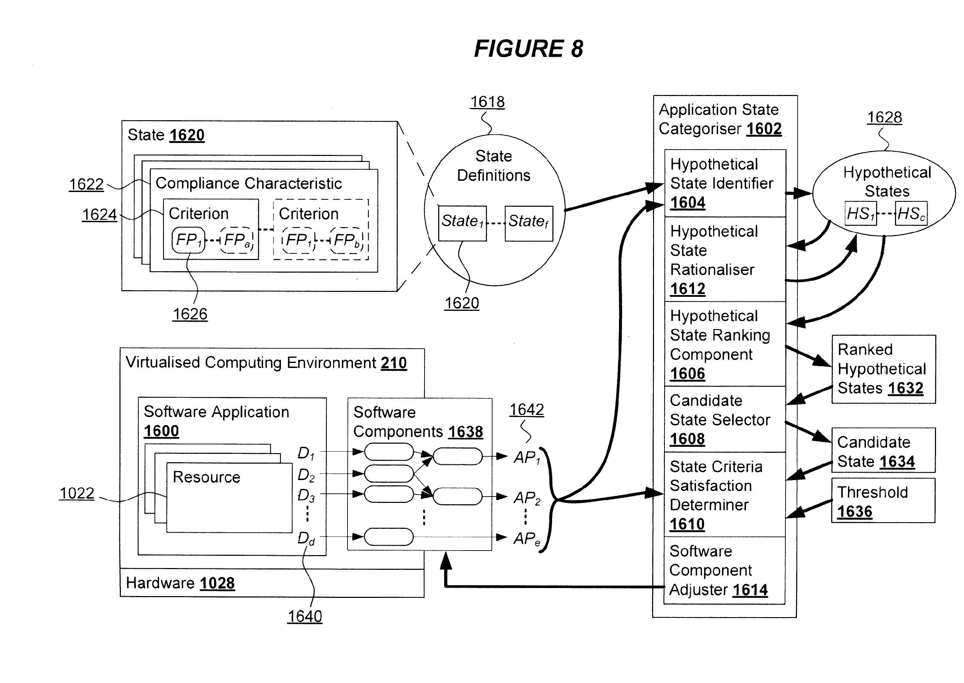

Figure 8 is a component diagram of an application state categoriser 1602 in accordance with a preferred embodiment of the present invention. The application state categoriser 1602 is a software or hardware component operable to categorise a state of a software application 1600 deployed and executing with a virtualised computing environment 210. The application 1600 has associated one or more resources 1022 instantiated for execution of the application 1600 with the virtualised computing environment 210. A state of the application 1600 can include any or all of, inter alia: a state of configuration of one or more resources 1022 for the application 1600; a state of the virtualised computing environment 210 with which the application 1600 executes; a state of operation of components or resources 1022 for the application 1600; a data state of the application 1600 or a component or resource 1022 for the application 1600; an installation, update or synchronisation state of the application 1600 or a component or resource 1022 of the application; or any other state of the application 1600 as will be apparent to those skilled in the art. In preferred embodiments of the present invention, states of the application 1600 correspond to states that are assessable as being compliant states or non-compliant states of the application. For example, a compliance requirement that an application employs or provides a particular functionality, technology or service can be reflected by a compliant application having a state in which such functionality, technology or service is provided.

The application 1600 has associated a set 1638 of one or more compliance software components for generating evidence of a state of the application 1600. The software components in the set 1638 are operable to collect, receive, measure or otherwise obtain data 1640 *D₁* to *D_{d}* relating to the application 1600. For example, the software components are operable to receive data relating to one or more of: the resources 1022 instantiated to execute the application 1600; the virtualised computing environment 210; or any service, infrastructure or cloud computing facility provided for the execution of the software application 210 whether internal or external to the virtualised computing environment 210. The one or more software components are operable alone, in collaboration or otherwise to generate a set 1642 of actual parameters *AP₁* to *APₑ.* One or more of the actual parameters in the set 1642 are suitable for evaluating criteria associated with compliance characteristics 1622 as is described below. While the software components in the set 1638 are illustrated in Figure 8 in the form of a network it will be appreciated that other arrangements of one or more software components can be employed, including flat, hierarchical and dispersed cooperating arrangements of software components.

The application state categoriser 1602 includes a receiver (not shown) operable to receive a set 1618 of state definitions. The set 1618 of state definitions includes a definition of one or more states 1620 in which a software application may execute or operate. Figure 8 illustrates one way to define a state of the application by way of a definition of one or more characteristics 1622 of an application. In the embodiment of Figure 8 the characteristics 1622 are compliance characteristics 1622 as hereinbefore described. An exemplary exploded view of state 1620 is illustrated in Figure 8 showing the state 1620 including one or more compliance characteristics 1622, each of the compliance characteristics 1622 including one or more compliance criteria 1624. Each of the compliance criteria 1624 is based on one or more formal parameters 1626 such as *FP₁* to *FPₐ.* An application that satisfies all criteria 1624 for all compliance characteristics 1622 of a state definition 1620 can be said definitively to have a state according to the state definition 1620. Such a case can be considered a *positive evaluation* of the criteria 1624 for all compliance characteristics 1622 of a state definition 1620. In contrast, an application for which at least one of the criteria 1624 for one or more compliance characteristics 1622 of a state definition 1620 is evaluable in the *negative* can be said definitively to not be in a state according to the state definition 1620 (i.e. *a negative evaluation*). In some circumstances the actual parameters 1642 provided by the set 1638 of software components will be such that an evaluation of all criteria 1624 for a state definition 1620 is not possible due to an absence of information corresponding to formal parameters of some or all of the criteria 1624. Thus, where no positive evaluation of the criteria 1624 is possible, and no negative evaluation is identified, the state of the application 1600 cannot be definitively determined.

Where a state of the application 1600 cannot be definitively determined to correspond to a state definition 1620 in the set 1618, a level of satisfaction of an application 1600 with a state definition 1620 can be measured. Such a level can be a quantification of a degree to which the application 1600 satisfies the criteria 1624 of compliance characteristics 1622 for a state definition 1602. Alternatively, the level of satisfaction can be a level selected from an enumerated list of levels based on a degree of satisfaction of criteria 1624 for a state definition 1602. For example, a proportion of a number of compliance criteria 1624 for a compliance characteristic 1622 that is positively evaluable can be used as part of a determination of a level of satisfaction of an application 1600 with a state definition 1620. Further, a proportion of a number of compliance characteristics 1622 for a state definition 1620 and for which all criteria 1624 are positively evaluable can be used as part of a determination of a level of satisfaction of an application 1600 with a state definition 1620. Further, different criteria 1624 of a compliance characteristic 1622 can be weighted such that different criteria 1624 have a different impact on a measure of a level of satisfaction. Similarly, different compliance characteristics 1622 for a state definition 1602 can be weighted such that different compliance characteristics 1622 have a different impact on a measure of a level of satisfaction.

For example, consider: a state definition having two characteristics 'M' and 'N', characteristic 'M' having two criteria 'M1' and 'M2' and characteristic 'N' having four criteria 'N1', 'N2', 'N3' and 'N4'. A positive evaluation of 'M1' and 'M2' for an application can be used to determine that characteristic 'M' is exhibited by the application. Further, a positive evaluation of 'N1', 'N2' and 'N3' leads to an indication that the application at least partly exhibits characteristic 'N'. However, without satisfaction of criterion 'N4' there is no positive evaluation of all criteria associated with characteristic 'N' and the characteristic is only partly exhibited by the application. A quantification of a level of satisfaction of the application with the exemplary state definition can be undertaken. For example, one way to quantify a level of satisfaction involves associating weightings with each characteristic in the state definition. Thus, characteristics 'M' and 'N' can have associated weightings among all characteristics in the state definition. Similarly, criteria 'M1' and 'M2' can have associated weightings within the definition of characteristic 'M'. Further, criteria 'N1', 'N2', 'N3' and 'N4' can have associated weightings within the definition of characteristic 'N'. An exemplary quantification method involves computing a measure of a level of satisfaction of all criteria for each characteristic, with criteria having equal weight. Thus, in the described example, characteristic 'M' has positive evaluations for all criteria 'M1' and 'M2' and thus the measure of a level of satisfaction for characteristic 'M' is 100%. Characteristic 'N' has positive evaluations for only 'N1', 'N2' and 'N3'. If all criteria in characteristic 'N' are equally weighted then characteristic 'N' can be said to be 75% satisfied. The level of satisfaction of both compliance characteristics 'N' and 'M' can be determined based on relative weights associated with each characteristic. If characteristic 'N' has a weighting of 0.4 and characteristic 'M' has a weighting of 0.6, the combined weight is evaluated as (0.4 x 100%) + (0.6 x 75%) = 86%. Thus, in this exemplary quantification of a level of satisfaction, the application can be said to have a level of satisfaction of 86% with the state definition.

The application state categoriser 1602 further includes multiple components including: a hypothetical state identifier 1604; a hypothetical state ranking component 1606; a candidate state selector 1608; a state criteria satisfaction determiner 1610; a hypothetical state rationaliser 1612; and a software component adjuster 1614.

The hypothetical state identifier 1604 is a hardware or software component operable to identify a set 1628 of hypothetical states for the application 1600 from the set of all state definitions 1618. The states in the set 1628 of hypothetical states are determined based on the data 1640 accessed by software components in the set 1638 of software components. In particular, the hypothetical states can be determined based on the set 1642 of actual parameters generated by the software components based on the data 1640. One way to identify the set 1628 of hypothetical states is to determine all states in the set 1618 of state definitions having associated formal parameters 1626 for which at least one actual parameter is included in the set 1642 of actual parameters. An alternative way to identify the set 1628 of hypothetical states is to determine all states in the set 1618 with which the application has a level of satisfaction exceeding a certain predetermined threshold. Such a threshold can be applicable to all states in the set 1618 of state definitions, or alternatively the threshold can be specific to one or more states in the set 1618 of state definitions such that different states could have different thresholds. Alternatively, in some embodiments, the set 1618 of state definitions can be used as an initial set 1628 of hypothetical states, the set 1628 of hypothetical states being refined and reduced in accordance with the processes described below.

The hypothetical state rationaliser 1612 is a software or hardware component operable to rationalise the set 1628 of hypothetical states by identifying states in the set 1628 for which a criterion is fully evaluable in the negative based on the set 1642 of actual parameters generated for the application 1600. Such a negative evaluation for a hypothetical state definitively identifies the application 1600 as not being in the hypothetical state. Accordingly, where a criterion for a state 1620 is fully evaluable in the negative the state is disregarded from consideration as a hypothetical state by removing the state from the set 1628 of hypothetical states. Thus, following processing by the hypothetical state rationaliser 1612, the set 1628 of hypothetical states represents a set of states each of which may correspond to a state of the application 1600. The set 1628 of hypothetical states thus constitutes a starting point for an identification of a candidate state 1634 for the application 1600 with which the application can be associated as a means for categorising the application as being in a particular state.

The hypothetical state ranking component 1606 is a hardware or software component for generating a ranking of the hypothetical states in the set 1628 such as a ranked list of hypothetical states1632. In a preferred embodiment the hypothetical states in the set 1628 are ranked based on a level of satisfaction by the application 1600 of each state in the set 1628. The candidate state selector 1608 is a software or hardware component for selecting a candidate state 1634 from the ranked hypothetical states 1632. For example, the candidate state 1634 can be selected as a state in the ranked hypothetical states 1632 having a greatest level of satisfaction by the application 1600.

The state criteria satisfaction determiner 1610 is a software or hardware component for determining a level of satisfaction of the candidate state 1634 by the application 1600. The level of satisfaction is determined based on the set 1642 of actual parameters and the criteria 1624 for the candidate state 1634. The state criteria satisfaction determiner 1610 is further operable to determine if the level of satisfaction of the application 1600 meets or exceeds a threshold level of satisfaction 1636. In a preferred embodiment the threshold level of satisfaction 1636 is predetermined to define a level of satisfaction of an application 1600 with a candidate state 1634 such that an application 1600 that meets or exceeds the predetermined threshold level of satisfaction 1636 is associated with the candidate state 1634 can be categorised as being in the candidate state 1634. The indication that the application is in the candidate state 1634 can be characterised further by a level of satisfaction of the application 1600 with the candidate state 1634 as determined by the state criteria satisfaction determiner 1610.

The state criteria satisfaction determiner 1610 determines that the level of satisfaction of the application 1600 with the candidate state 1634 based on the criteria 1624 for the candidate state 1634. The criteria 1624 for the candidate state 1634 are evaluated based on the set 1642 of actual parameters for the application 1600. Thus where the level of satisfaction of the application 1600 does not meet the threshold level 1636 it follows that at least one formal parameter 1626 for the criteria 1624 of the candidate state 1634 does not have a corresponding actual parameter in the set 1642 for the application 1600. Such formal parameters 1626 not having a corresponding actual parameter are thus absent formal parameters. Accordingly, absent formal parameters lead to an incomplete evaluation of the criteria 1624 for the candidate state 1634. In this case the software component adjuster 1614 is operable to adjust the set of software components 1638 to obtain an improved set of actual parameters 1642, the improved set of actual parameters 1642 including at least one actual parameter corresponding to an absent formal parameter, as described below.

The software component adjuster 1614 is a software or hardware component for adjusting the software components in the set 1638 of software components such that the adjusted set 1638 of software components is operable to obtain improved data associated with the application 1600. The improved data is suitable for deriving at least one absent actual parameter for the candidate state 1634. In a preferred embodiment the improved data provides for the generation of an improved set 1642 of actual parameters including additional or alternative actual parameters. The improved set 1642 of actual parameters includes at least one absent actual parameters.

The software component adjuster 1614 can adjust the set 1638 of software components by, inter alia: inserting or adding one or more new software component to the set 1638; replacing one or more software components in the set 1638; and/or modifying one or more software components in the set 1638. Additional or replacement software components can be selected by the software component adjuster 1614 from a pool of software components. Such selection can be based on indications of actual parameters provided by software components in the pool to identify software components operable to provide the absent parameters. Further, software components in the set 1368 can be modified, such as by modifying a configuration of the software components. With reference to Figure 3, a software component 1008a can include logic 10084 being operable to perform operations on data received by the software component including, inter alia: transformation; extraction; measurement; compilation; evaluation; or any other functional operation on the data. The logic 10084 can be configured or modified to effect a change in the data 10082 provided by the software component 1008a in order to generate and provide an absent actual parameter. It will be appreciated that the provision of an absent actual parameter may require the cooperation of multiple software components, each potentially implementing logic 10084. Thus, in some embodiments, an arrangement of software components provides one or more absent actual parameters using a cooperating arrangement of software components such as is illustrated in, and described with respect to, Figure 5.

In one embodiment, the software component adjuster 1614 selects a first software component operable to generate an actual parameter corresponding to an absent actual parameter. The first software component has associated one or more identifications 10086 of data dependencies of the first software component corresponding to data required to generate the actual parameter as a data output 10082. The software component adjuster 1614 and/or the first software component selects one or more further software components operable to provide the data required by the first software component such that the data dependencies of the first software component are satisfied. This approach to selecting further software components can be repeated such that data dependencies of selected software components are satisfied by selecting further software components until all data dependencies are satisfied. Thus, in this way the software component adjuster 1614 is operable to adjust the set 1642 of software components to obtain improved data for deriving one or more absent actual parameters for the candidate state 1634.

Subsequent to the adjustment by the software component adjuster 1614, the application state categoriser 1602 reiterates the operation of one or more of the hypothetical state rationaliser 1612, the hypothetical state ranking component 1606, the candidate state selector 1608, the state criteria satisfaction determiner 1610 and the software component adjuster 1614. Thus as the process is iterated, adjustments to the set 1638 of software components leads to further or different actual parameters in the set 1642. The set 1628 of hypothetical states becomes further rationalised to remove states identified as having a negative evaluation on the basis of further or additional actual parameters, and the application is repeatedly checked for a level of satisfaction of criteria 1624 associated with a candidate state 1634 meeting the threshold 1636. As the set 1638 of software components is adjusted, the improved data obtained by the software components provides for additional or alternative actual parameters allowing a more accurate assessment of a level of satisfaction of the application 1600 with the criteria 1624 of the candidate state 1634. When the threshold 1636 is met the application 1600 is categorised as being in the candidate state 1634 with the categorisation being characterised by the level of satisfaction of the application 1600 with the criteria 1624 of the candidate state 1634.

In this way it is possible to determine an indicative state of execution of the application 1600 and a degree of confidence associated with the determined indicative state, even where there is no definitive determination of a state of the application 1600. Categorising the application 1600 in this way is particularly advantageous when assessing compliance of the application 1600 with one or more compliance requirements. Compliance requirements can be reflected as application states in the set 1618 of state definitions such that, for example, a set of one or more compliant application states can be defined, and a set of one or more non-compliant application states can be defined. Thus, where no definitive determination of a level of compliance of an application can be determined, embodiments of the present invention provide for an identification of a candidate state 1634 for categorising the application to provide an indication of whether the software components 1638 generate evidence indicating that the application 1600 may be within a compliant state or a non-compliant state. Further, the level of satisfaction of the application 1600 with the candidate state 1634 provides a level of confidence of the indication.

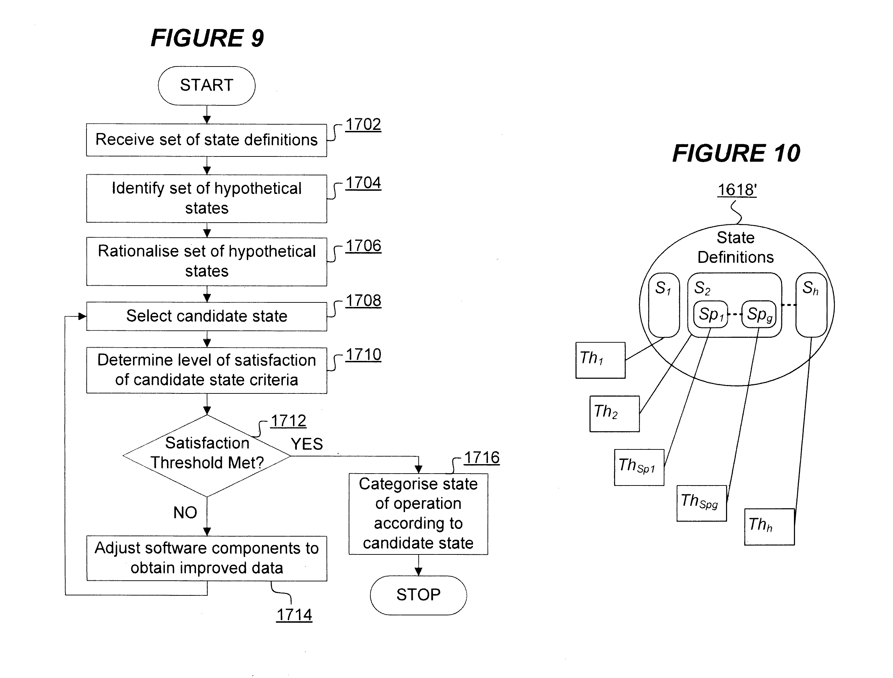

Figure 9 is a flowchart of a method of the application state categoriser 1602 of Figure 8 in accordance with a preferred embodiment of the present invention. Initially, at step 1702, the method receives the set of state definitions 1618. At step 1704 the method identifies the set of hypothetical states 1628. At step 1706 the method rationalises the set of hypothetical states 1628 by removing states having a criterion 1624 that is fully evaluable in the negative. At step 1708 the method selects a candidate state 1634. In a preferred embodiment the step 1708 is responsive to a ranking of the hypothetical states by the hypothetical state ranking component 1606. At step 1710 the method determines a level of satisfaction of the application 1600 with the criteria 1624 associated with the candidate state 1634. At step 1712 the method determines if the threshold level of satisfaction 1636 is met. Where the threshold 1636 is not met the method proceeds to step 1714 where the software component adjuster 1614 adjusts the set of software components 1638 to obtain improved data associated with the application 1600 in order to derive at least one absent actual parameter for the candidate state 1634. Subsequently to step 1714 the method reiterates by returning to step 1708. Where the threshold 1636 is determined to be met at step 1712, the method proceeds to step 1716 where the application 1600 is categorised as being in the candidate state of operation 1634. The categorisation at step 1716 can be characterised by the level of satisfaction of the application 1600 with the criteria 1624 for the characteristics 1622 of the candidate state.

In a preferred embodiment, the application state categoriser 1602 further includes a detector component for detecting a change to the resources 1022 instantiated for the application 1600. The virtualised computing environment 210 can exhibit elastic characteristics which can result in adaptations or modifications to the resources 1022 instantiated in and for the application 1600 including changes in real-time at runtime. Such characteristics can be considered a reprovisioning of resources 1022 for the application 210. Elasticity can also result in the supplementing of resources 1022 with additional resources or the replacement of resources with alternative or new resources. Such changes to the resources 1022 for the application 1600 can be detected by the detector component. In response to a detection by the detector of a change to one or more resources 1022 for the application, the application state categoriser 1602 is operable to repeat at least the identifying 1704, selecting 1708 and determining 1710 steps of the method of Figure 9 to re-categorise a state of the application 1600.

Embodiments of the present invention are further operable to provide a categorisation of a state of the application 1600 based on a gradated definition of application states such that state definitions in the set 1618 can include generic or composite states having associated specific states. In such embodiments, the application state categoriser 1602 is operable iteratively to cause the generation of improved evidence by way of actual parameters 1642 to categorise a state of the application by progressively more specific state definitions. Figure 10 is a representation of a set of state definitions 1618' including a generic state definition *S₂* having a family of specific state definitions *SP₁* to SPg in accordance with an embodiment of the present invention. In the embodiment of Figure 10, each state in the set 1618' has associated a threshold such that state *S₁* has associated threshold *Th₁,* generic state *S₂* has associated threshold *Th₂*, specific state *Sp₁* has associated threshold *Thₛₚ₁,* specific state *Sp_{g}* has associated threshold *Th_{spg}* and so on. The specific states *Sp₁ to Sp_{g}* can be defined in a number of ways. In one embodiment, the specific states can be defined as states of operation of application 1600 having criteria in addition to the criteria defined for the generic state. Thus, the burden to satisfy the specific states is greater than the burden to satisfy the generic state and so a gradated series of states is formed. In an alternative embodiment, the criteria associated with the specific state can be substantially the same as criteria associated with the generic state and the threshold associated with the specific state is different to the threshold associated with the generic state. In particular, the threshold for a specific state is such that a greater level or degree of satisfaction with the criteria is required for the application 1600 to be categorised as being in the specific state that the threshold required to be categorised in the generic state.

For example, in an embodiment where the application 1600 is a web based application receiving requests from remote clients, the generic state *S₂* can correspond to a state of operation where the application 1600 experiences a "denial of service" event resulting from multiple requests received from one or more clients causing an interruption to the services provided by the web based application. Criteria associated with such a generic state can characterise a generic denial of service event including, for example, criteria that services provided by the application are interrupted. A series of specific states *Sp₁* to *Sp_{g}* can be defined for particular denial of service events including, for example: a particular number of requests having been received; a particular distribution or level of distribution of the origin of received requests; a particular time interval between requests; etc. Thus, criteria can be formulated for specific states of the application corresponding to these more specific characteristics of denial of service requests such that, at runtime, the application state categoriser 1602 is operable to categorise the application 1600 based on evidence received from the software components 1638 and modifications to the software components 1638 by the software component adjuster 1614.

Thus, in one embodiment, the method of the application state categoriser 1602 is operable to receive a set of state definitions of specific states for a candidate state 1634 when the application 1600 is categorised as being in the candidate state 1634. Each of the specific state definitions is consistent with the state definition 1620 illustrated in Figure 8 such that the specific state definitions include a definition of a compliance characteristic 1622 having associated criteria 1624 based on one or more formal parameters 1626. Alternatively, where the criteria 1624 and/or characteristics 1622 for a specific state is the same as criteria 1624 and/or characteristics 1622 for an associated generic state, the state definition 1620 for the specific state can include a reference to a state definition for a corresponding generic state. The application state categoriser 1602 is further operable to undertake at least the identifying 1704, selecting 1708 and determining 1710 steps. In one embodiment the threshold level of satisfaction 1638 is a specific level of satisfaction associated with a specific state. Thus, a sufficient level of satisfaction of the application 1600 with a generic state can be further characterised by a sufficient (potentially further) level of satisfaction with a specific state, the specific state corresponding to a state having a different degree of confidence associated with it due to additional criteria 1624 associated with the specific state or a further level of satisfaction required to satisfy the threshold for the specific state.

The categorisation of a state of an application is suitable for affecting the operation of the application when deployed and the configuration of a virtualised computing environment. For example, applications being categorised as having a particular state of operation can be allowed or precluded from all or some operations. Thus, in some embodiments the invention provides an access control function to allow or preclude access to the application or resources for a deployed application in response to a categorisation of a state of the application. Where the state of the application corresponds to a compliance state, the operation of embodiments of the invention can reflect an assessment of a level or extent of compliance based on the categorisation. Further, in some embodiments the invention provides a compliance enforcement function where compliance requirements defining technical requirements of an application are imposed on the application automatically at runtime of the application based on an assessment of a level or extent of compliance of the application according to a categorisation of the application in accordance with embodiments of the present invention. Yet further, embodiments of the present invention can be operable to provide safety, security, reliability and/or stability features of an application by assessing a level or extent of compliance of the application with technical compliance requirements for assuring a predefined level of safety, security, reliability and/or/stability and indicating such level to inform a determination of future operation and/or to inform a compliance enforcement process. Thus applications that are safety critical, security critical or high-reliability critical can be monitored and affected using the approaches described with respect to embodiments of the present invention.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for categorising a state of operation of a software application in execution in a virtualised computing environment, the application having associated a set of software components being operable to access data associated with the application, the method comprising the steps of:
receiving a set of software application state definitions, each state definition including a definition of an application characteristic having associated criteria based on one or more formal parameters;
identifying a set of hypothetical states for the application from the set of state definitions based on the data, wherein the data is used to formulate a set of one or more actual parameters corresponding to formal parameters for criteria associated with one or more of the states in the set of hypothetical states;
for each of the states in the set of hypothetical states, in response to a determination that criteria associated with a current state is fully evaluable in the negative, removing the current state from the set of hypothetical states;
selecting a candidate state from the set of hypothetical states based on a level of satisfaction of criteria associated with each state in the set of hypothetical states, the candidate state having associated one or more absent formal parameters for which no actual parameter is included in the set of actual parameters; and
determining if a level of satisfaction of criteria associated with the candidate state fails to meet a threshold level of satisfaction, and in response to the determination undertaking the steps of:
a) adjusting the set of software components such that the set of software components is operable to obtain an improved set of actual parameters associated with the application, the improved set of actual parameters including at least one actual parameter corresponding to an absent formal parameter; and
b) repeating the removing, selecting and determining steps.

2. The method of claim 1 wherein the candidate state is a generic state including a family of specific states, and wherein the threshold level of satisfaction is a first threshold level of satisfaction, the method further comprising, in response to a determination that the first threshold level of satisfaction is met:
receiving a set of state definitions of the specific states for the candidate state, each specific state definition including a definition of an application characteristic having associated criteria based on one or more formal parameters;
repeating the identifying, selecting and determining steps, wherein the identifying step identifies the set of hypothetical states for the application from the set of state definitions of the specific states, and the threshold level of satisfaction of the determining step is a second threshold level of satisfaction, the second threshold level of satisfaction requiring a further level of satisfaction beyond the first threshold.

3. The method of claim 2 wherein the generic state has associated a software compliance requirement, and each of the specific states corresponds to a state having associated a different degree of confidence that the compliance requirement is satisfied.

4. The method of any preceding claim further comprising:
identifying one or more resources instantiated for execution of the application; and in response to a determination that one or more of the identified resources is changed, repeating the identifying, selecting and determining steps.

5. The method of any preceding claim further comprising:
in response to a determination that the level of satisfaction of criteria associated with the candidate state meets the threshold level of satisfaction, categorising the application as being in the candidate state.

6. The method of claim 5 wherein the candidate state of operation of the application is suitable for indicating a state of compliance of the application with one or more compliance requirements.

7. An apparatus for categorising a state of operation of a software application in execution in a virtualised computing environment, the application having associated a set of software components being operable to access data associated with the application, the apparatus comprising:
a receiver component operable to receive a set of software application state definitions, each state definition including a definition of an application characteristic having associated criteria based on one or more formal parameters;
a hypothetical state identifier component operable to identify a set of hypothetical states for the application from the set of state definitions based on the data, wherein the data is used to formulate a set of one or more actual parameters corresponding to formal parameters for criteria associated with one or more of the states in the set of hypothetical states;
a hypothetical state rationaliser component operable to remove one or more states from the set of hypothetical states in response to a determination that criteria associated with each of the one or more states is fully evaluable in the negative;
a candidate state selector component operable to select a candidate state from the set of hypothetical states based on a level of satisfaction of criteria associated with each state in the set of hypothetical states, the candidate state having associated one or more absent formal parameters for which no actual parameter is included in the set of actual parameters; and
state criteria satisfaction determiner component operable to determine if a level of satisfaction of criteria associated with the candidate state fails to meet a threshold level of satisfaction; and
a software component adjuster component operable in response to the state criteria satisfaction determiner to adjust the set of software components such that the set of software components is operable to obtain an improved set of actual parameters associated with the application, the improved set of actual parameters including at least one actual parameter corresponding to an absent formal parameter.

8. The apparatus of claim 7 wherein the candidate state is a generic state including a family of specific states,
wherein the threshold level of satisfaction is a first threshold level of satisfaction, wherein the receiver component is further operable, responsive to a determination that the first threshold level of satisfaction is met, to receive a set of state definitions of the specific states for the candidate state, each specific state definition including a definition of an application characteristic having associated criteria based on one or more formal parameters,
wherein the hypothetical state identifier component is further operable to identify the set of hypothetical states for the application from the set of state definitions of the specific states, and
wherein the state criteria satisfaction determiner component is further operable to determine if a level of satisfaction of criteria associated with specific state as a candidate state fails to meet a second threshold level of satisfaction, the second threshold level of satisfaction requiring a further level of satisfaction beyond the first threshold.

9. The apparatus of claim 8 wherein the generic state has associated a software compliance requirement, and each of the specific states corresponds to a state having associated a different degree of confidence that the compliance requirement is satisfied.

10. The apparatus of any of claims 7 to 9 further comprising:
a detector component operable to detect one or more resources instantiated for execution of the application.

11. The apparatus of any of claims 7 to 10 further comprising:
a categoriser component operable in response to a determination that the level of satisfaction of criteria associated with the candidate state meets the threshold level of satisfaction to categorise the application as being in the candidate state.

12. The apparatus of claim 11 wherein the candidate state of operation of the application is suitable for indicating a state of compliance of the application with one or more compliance requirements.

13. A computer program element comprising computer program code to, when loaded into a computer system and executed thereon, cause the computer to perform the steps of a method as claimed in any of claims 1 to 6.
